# EUROPEAN PATENT APPLICATION

(11) **EP 4 650 734 A1**
(43) Date of publication of application: **19.11.2025**
(21) Application number: 25176194.6
(22) Date of filing: 13.05.2025
(51) Int. Cl.: G01J 5/061, G01J 5/06, G01J 5/0831

(54) **HOT STOP APERTURE FIXTURES FOR THERMAL IMAGING MEASUREMENTS**

(30) Priority: 16.05.2024 US 202418666245
(71) Applicant: RTX Corporation, Farmington, CT 06032 (US)
(72) Inventor: CONSIGLIO, Andrew A., Woodbury, 06798 (US); HALDEMAN, Charles W., Simsbury, 06070 (US)
(74) Representative: Dehns

(57) **Abstract**

A system (100) includes a camera (105) configured to detect thermal radiation (120) emitted from a target (125). The system (100) also includes an optical assembly (110) configured to be disposed between the camera (105) and the target (125). The system (100) further includes a hot stop assembly (115) disposed between the camera (105) and the optical assembly (110). The hot stop assembly (115) includes a hot aperture (130) having a first surface (160) configured to face the target (125) and a second surface (165) configured to face an interior portion of the hot stop assembly (115). The hot stop assembly (115) also includes a cold aperture (140) having a first surface (170) configured to face the camera (105) and a second surface (175) configured to face the interior portion of the hot stop assembly (115). The hot aperture (130) is thermally isolated from the cold aperture (140) and reduces transient temperature changes from the environment on the images.

## Description

### TECHNICAL FIELD

This disclosure is generally directed to thermal imaging systems. More specifically, this disclosure is directed to hot stop aperture fixtures to minimize transient effects of environmental changes on thermal imaging measurements.

### BACKGROUND

In thermal imaging activities, a thermal imaging sensor (also referred to as a camera) is aimed at a target, and thermal information of the target, such as surface temperature, is sensed or measured by the sensor. In some situations, the camera "view" is wider than the optical field of view coming from the target. This situation can occur due a wide range of optical design constraints. In such situations, outside light (or other thermal energy) can enter the camera, and this external energy can result in a bias in the recorded temperature of the image recorded by the sensor.

### SUMMARY

This disclosure is directed to hot stop aperture fixtures for thermal imaging measurements. The disclosed embodiments can isolate transient variation from external sources that could impact the hot stop temperature, and deliver a consistent "cold stop" temperature which allows for characterization and compensation of the effect at the image.

In one aspect, there is provided a system that includes a camera configured to detect thermal radiation emitted from a target. The system also includes an optical assembly configured to be disposed between the camera and the target. The system further includes a hot stop assembly disposed between the camera and the optical assembly. The hot stop assembly includes a hot aperture having a first surface configured to face the target and a second surface configured to face an interior portion of the hot stop assembly. The hot stop assembly also includes a cold aperture having a first surface configured to face the camera and a second surface configured to face the interior portion of the hot stop assembly. The hot aperture is thermally isolated from the cold aperture.

In another aspect, there is provided a device that includes a hot stop assembly configured to be disposed between a thermal imaging camera and an optical assembly that is able to be positioned between the thermal imaging camera and a target. The hot stop assembly includes a hot aperture having a first surface configured to face the target and a second surface configured to face an interior portion of the hot stop assembly. The hot stop assembly also includes a cold aperture having a first surface configured to face the camera and a second surface configured to face the interior portion of the hot stop assembly. The hot aperture is thermally isolated from the cold aperture.

In a further aspect, there is provided a method that includes generating thermal images of a target using a camera. The method also includes manipulating thermal radiation from the target before the thermal radiation reaches the camera using an optical assembly disposed between the camera and the target. The method further includes reducing bias effects of background radiation on the thermal images of the target using a hot stop assembly disposed between the camera and the optical assembly. The hot stop assembly includes (i) a hot aperture having a first surface facing the target and a second surface facing an interior portion of the hot stop assembly and (ii) a cold aperture having a first surface facing the camera and a second surface facing the interior portion of the hot stop assembly. The hot aperture is thermally isolated from the cold aperture.

Features of embodiments are set forth in the dependent claims.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
FIGURE 1 illustrates an example thermal imaging system according to this disclosure;
FIGURE 2 illustrates an example device for use in a thermal imaging system according to this disclosure; and
FIGURE 3 illustrates an example method for thermal imaging according to this disclosure.

### DETAILED DESCRIPTION

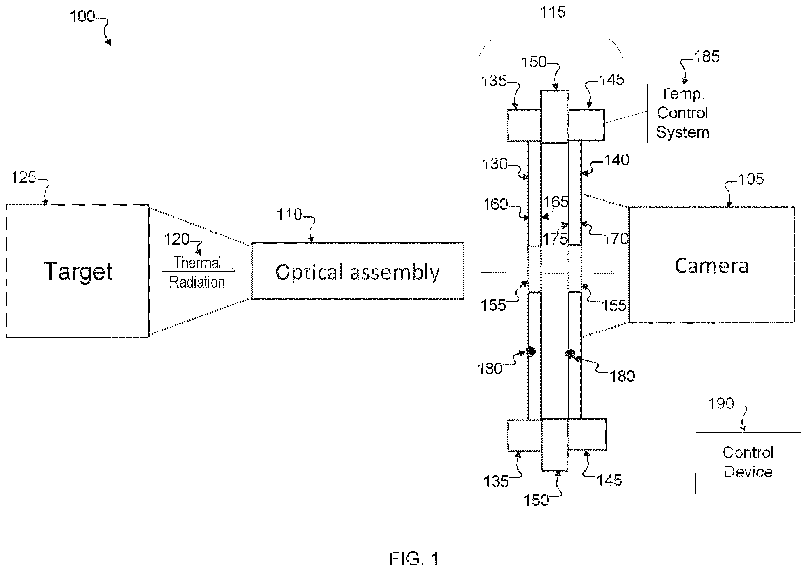

FIGURES 1 through 3, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

For simplicity and clarity, some features and components are not explicitly shown in every figure, including those illustrated in connection with other figures. It will be understood that all features illustrated in the figures may be employed in any of the embodiments described. Omission of a feature or component from a particular figure is for purposes of simplicity and clarity and is not meant to imply that the feature or component cannot be employed in the embodiments described in connection with that figure. It will be understood that embodiments of this disclosure may include any one, more than one, or all of the features described here. Also, embodiments of this disclosure may additionally or alternatively include other features not listed here.

As discussed above, in thermal imaging activities, a thermal imaging sensor (also referred to as a camera) is aimed at a target, and thermal information of the target, such as surface temperature, is sensed or measured by the sensor. In some situations, the camera "view" is wider than the optical field of view coming from the target. This situation can occur due a wide range of optical design constraints. In such situations, outside light (or other thermal energy) can enter the camera and can bias the image.

A typical solution to image bias due to outside light is to put an aperture between the camera and the light source. Ideally, the aperture is cooled to a very low temperature (such 70 degrees Kelvin or another cryogenic temperature below the operating temperature of the camera sensor) so that any thermal energy emitted from the aperture itself would not bias the thermal imaging data of the target. Such an aperture can be referred to as a "cold stop." However, there are often situations in engine and rig testing or other environments where the aperture cannot be substantially cooled. In these situations, the aperture can be referred to as a "hot stop," and the thermal radiation from the hot stop, and its impact on the target image, need to be accounted for. In situations where the hot stop temperature can vary due to changes in heat loads, changes in cooling flows, and the like, this can become problematic.

This disclosure provides hot stop aperture fixtures for thermal imaging measurements, which in some applications can be used with an aviation engine, such as a turbine engine. As discussed in greater detail below, the disclosed embodiments include multiple planar structures at the aperture that act as a radiation block for the aperture. The planar structures control the amount of radiation exchange around the aperture. Note that while this disclosure is described with respect to aviation turbine engines, it will be understood that the principles disclosed here are also applicable to other types of devices or environments. For example, the hot stop aperture fixtures may be implemented in any other environment in which thermal imaging of a target would be useful.

FIGURE 1 illustrates an example thermal imaging system 100 according to this disclosure. As shown in FIGURE 1, the system 100 includes a camera 105, an optical assembly 110, and a hot stop assembly 115. The camera 105 is a thermal imaging camera (or other type of imaging sensor) that is configured for detecting thermal radiation 120 (such as in the infrared band) emitted from a target 125. The thermal radiation 120 corresponds to thermal properties of the target 125, which can be detected by the camera 105. The camera 105 includes multiple properties and parameters intrinsic to a camera, such as an F number.

The optical assembly 110 is positioned between the camera 105 and the target 125, and comprises one or more lenses, prisms, mirrors, or other optical elements that shape, focus, or otherwise manipulate the thermal radiation 120 from the target 125 before it reaches the camera 105. In some embodiments, the optical assembly 110 may have a different F number than the camera.

The camera 105 is decoupled from the optical assembly 110 and has a field of view that expands beyond the boundaries of the optical assembly 110, as indicated by the dashed lines. Thus, as discussed above, there are areas on either side of the optical assembly 110 where thermal energy can be detected by the camera 105. When the temperature of the background area is different than the temperature of the camera 105, this can appear as background noise, which can create a bias on the thermal imaging process.

The target 125 represents an object, or a portion of an object, whose thermal properties are detected by the camera 105. In some embodiments, the target 125 may be one or more components of an engine, such as a turbine engine. In some embodiments, the target 125 may be rotating, or otherwise moving, or may be substantially still. While in operation, the temperature of the target 125 can change over time (such as heat up, then cool down, and then heat up again). The temperature change can occur over time, and can occur randomly, in a periodic manner, or in some other pattern. In some embodiments, the camera 105, the optical assembly 110, and the target 125 can all be disposed within an enclosure or housing, such as an engine case.

The hot stop assembly 115 is disposed between the camera 105 and the optical assembly 110, and is provided to minimize the bias effects of background radiation on the thermal images of the target 125 taken by the camera 105. The hot stop assembly 115 is shown in cross section in FIGURE 1.

The hot stop assembly 115 includes a hot aperture 130, a hot heat sink 135, a cold aperture 140, a cold heat sink 145, and a thermal isolation block 150. Openings 155 in the hot aperture 130 and the cold aperture 140 allow the thermal radiation 120 from the target 125 to pass to the camera 105.

The hot aperture 130 is generally planar and is exposed to the area surrounding the target 125. Time-varying heat loads from the target 125 or other components around the target 125 can affect the temperature of the hot aperture 130 through convection, conduction, radiation, or a combination of two or more of these. The hot aperture 130 includes a first surface 160 that faces the target 125, and a second surface 165 that faces an interior portion of the hot stop assembly 115. In some embodiments, the second surface 165 has a very low emissivity (such as 0.05, 0.1, or any other suitable value) to reflect thermal radiation from the cold aperture 140. The first surface 160 has a higher emissivity (such as 0.9, 0.95, or any other suitable value), and thus reflects little of the heat load from the target 125 or the surrounding area.

The hot heat sink 135 is coupled to the hot aperture 130 and is provided to receive any thermal energy collected or absorbed by the hot aperture 130 and transfer the thermal energy away from the overall hot stop assembly 115. In some embodiments, the hot heat sink 135 is a thermal mass having high thermal conductivity (such as a metal) and a mass that is significantly higher than the hot aperture 130.

The cold aperture 140 is generally planar and is positioned generally parallel to the hot aperture 130. The cold aperture 140 is exposed to the area surrounding the camera 105. The cold aperture 140 includes a first surface 170 that faces the camera 105, and a second surface 175 that faces the interior portion of the hot stop assembly 115. In some embodiments, the first surface 170 has a high emissivity (such as 0.9, 0.95, or any other suitable value), and thus does not reflect the temperature of the camera 105 back onto its image. The second surface 175 has a low emissivity (such as 0.05, 0.1, or any other suitable value) to reflect thermal radiation from the hot aperture 130.

The cold heat sink 145 is coupled to the cold aperture 140 and is provided to help maintain the cold aperture 140 at a substantially constant temperature. While referred to as a "heat sink," the cold heat sink 145 can actually transmit thermal energy to, or receive thermal energy from, the cold aperture 140 in order to maintain the cold aperture 140 at the substantially constant temperature.

The cold heat sink 145 itself is designed to have a substantially constant temperature. In some embodiments, the cold heat sink 145 can include a large thermal mass that passively mitigates temperature changes. Additionally or alternatively, the cold heat sink 145 can include, or be coupled to, an optional active temperature control device or system 185 that includes one or more heating or cooling elements that transfer thermal energy to or from the cold heat sink (and the cold aperture 140), as needed to maintain a substantially constant temperature.

As discussed above, the temperature of the target 125 can vary substantially over time. The hot aperture 130 is exposed to the target 125 and thus may also vary substantially in temperature, as a result of its exposure to the temperature-changing target 125, as well as other sources of variation based on the location of the hot aperture 130. While the temperature of the target 125 can change over time, it is advantageous for the cold aperture 140 to have a stable temperature over time, since its first surface 170 is within the field of view of the camera 105. By having a substantially constant temperature, the cold aperture 140 can cause less bias or a more predictable bias in the thermal imaging by the camera 105, which can then be accounted for.

The thermal isolation block 150 is disposed between the hot heat sink 135 and the cold heat sink 145, and is formed of one or more insulative materials that are selected to substantially eliminate conductive heat transfer between the hot heat sink 135 and the cold heat sink 145, while maintaining structural integrity, so the apertures 130 and 140 do not move relative to each other. Due to the thermal isolation block 150, the cold heat sink 145 and the cold aperture 140 are thermally isolated from the hot heat sink 135 and the hot aperture 130, such that the transfer of thermal energy between the cold aperture 140 and the hot aperture 130 is very limited. As a result, the cold aperture 140 has a much more stable temperature than the hot aperture 130. That is, the temperature of the cold aperture 140 rises and falls much less over time than does that of the hot aperture 130. The more stable temperature results in less bias or a more predictable bias in the thermal imaging by the camera 105.

The hot stop assembly 115 also includes one or more temperature sensors 180 that can monitor temperatures in the hot stop assembly 115. For example, one temperature sensor 180 disposed on the hot aperture 130 can measure the temperature of the hot aperture 130, and another temperature sensor 180 disposed on the cold aperture 140 can measure the temperature of the cold aperture 140. In some embodiments, the temperature sensors 180 can be direct sensors such as thermocouples, or non-contact sensors such as infrared (IR) sensors, or indirect measures of temperature through some secondary property of the hot stop (such as growth).

The hot stop assembly 115 can also include a control device 190. The control device 190 can receive temperature measurements from the temperature sensors 180 and monitor and correct data as the apertures 130 and 140 change temperature. The control device 190 can also be used to monitor the aperture environment and time rate of temperature change for better compensation, operation, or design guidelines. In some embodiments, the control device 190 can provide active control in response to a reported temperature being outside of a threshold range. For example, if the temperature of the cold aperture 140 rises or falls beyond the threshold range, the control device 190 can activate and control the active temperature control system 185 to add or remove thermal energy from the cold heat sink 145 to counter any environmental changes.

As discussed above, the hot stop assembly 115 minimizes conduction of thermal energy through the mechanical assembly, minimizes convective heat transfer between the apertures (such as using a vacuum seal), and reduces radiative heat transfer through selection of materials with a desired emissivity on various surfaces. In some embodiments, the selection of materials, locations, and emissivities can be determined by a full heat transfer analysis based on design constraints and the operating environment.

Although FIGURE 1 illustrates an example thermal imaging system and related details, various changes may be made to FIGURE 1. For example, while FIGURE 1 shows two temperature sensors 180 and one control device 190, actual implementations can include other numbers of temperature sensors 180 and control devices 190. In addition, various components shown and described above may be combined, further subdivided, replicated, rearranged, or omitted and additional components may be added according to particular needs.

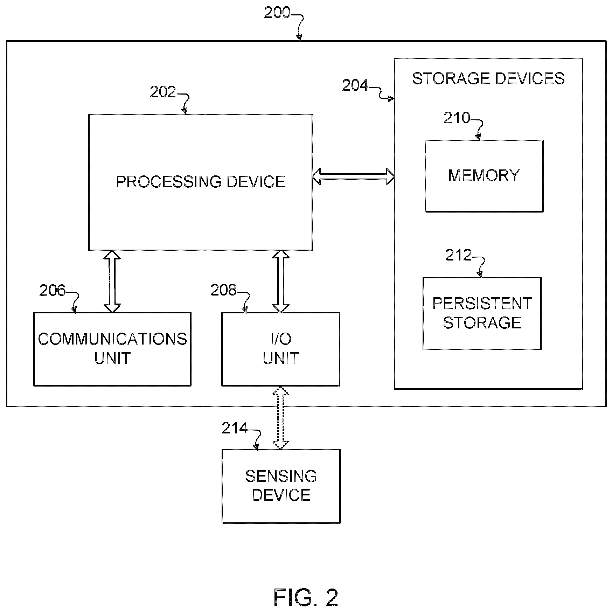

FIGURE 2 illustrates an example device 200 for use in a thermal imaging system according to this disclosure. One or more instances of the device 200 may, for example, be used to at least partially implement the functionality of the control device 190 of FIGURE 1. However, the functionality of the control device 190 may be implemented in any other suitable manner. Also, the same or similar arrangement of components may be used to at least partially implement the functionality of one or more of the control device 190 in FIGURE 1. However, the functionality of each control device 190 may be implemented in any other suitable manner.

As shown in FIGURE 2, the device 200 denotes a computing device or system that includes at least one processing device 202, at least one storage device 204, at least one communications unit 206, and at least one input/output (I/O) unit 208. The processing device 202 may execute instructions that can be loaded into a memory 210. The processing device 202 includes any suitable number(s) and type(s) of processors or other devices in any suitable arrangement. Example types of processing devices 202 include one or more microprocessors, microcontrollers, digital signal processors (DSPs), application specific integrated circuits (ASICs), field programmable gate arrays (FPGAs), or discrete circuitry. This can be part of a separate computer system used for data acquisition and post processing, or it can be configured as a separate unit mounted on an engine for real time processing of engine data.

The memory 210 and a persistent storage 212 are examples of storage devices 204, which represent any structure(s) capable of storing and facilitating retrieval of information (such as data, program code, and/or other suitable information on a temporary or permanent basis). The memory 210 may represent a random access memory or any other suitable volatile or non-volatile storage device(s). The persistent storage 212 may contain one or more components or devices supporting longer-term storage of data, such as a read only memory, hard drive, Flash memory, or optical disc.

The communications unit 206 supports communications with other systems or devices. For example, the communications unit 206 can include a network interface card or a wireless transceiver facilitating communications over a wired or wireless network. The communications unit 206 may support communications through any suitable physical or wireless communication link(s).

The I/O unit 208 allows for input and output of data. For example, the I/O unit 208 may provide a connection for user input through a keyboard, mouse, keypad, touchscreen, or other suitable input device. The I/O unit 208 may also provide a connection for at least one sensing device 214 that can be used for measuring and monitoring temperatures in a thermal imaging environment, such as described above. In some embodiments, the sensing device 214 can represent one or more of the temperature sensors 180. The I/O unit 208 may also send output to a display, printer, or other suitable output device. Note, however, that the I/O unit 208 may be omitted if the device 200 does not require local I/O, such as when the device 200 can be accessed remotely.

In some embodiments, the instructions executed by the processing device 202 can include instructions that implement the functionality of the control device 190 described above. For example, the instructions executed by the processing device 202 can include instructions for controlling the active temperature control system 185.

Although FIGURE 2 illustrates one example of a device 200 for use in a thermal imaging system, various changes may be made to FIGURE 2. For example, computing devices and systems come in a wide variety of configurations, and FIGURE 2 does not limit this disclosure to any particular computing device or system.

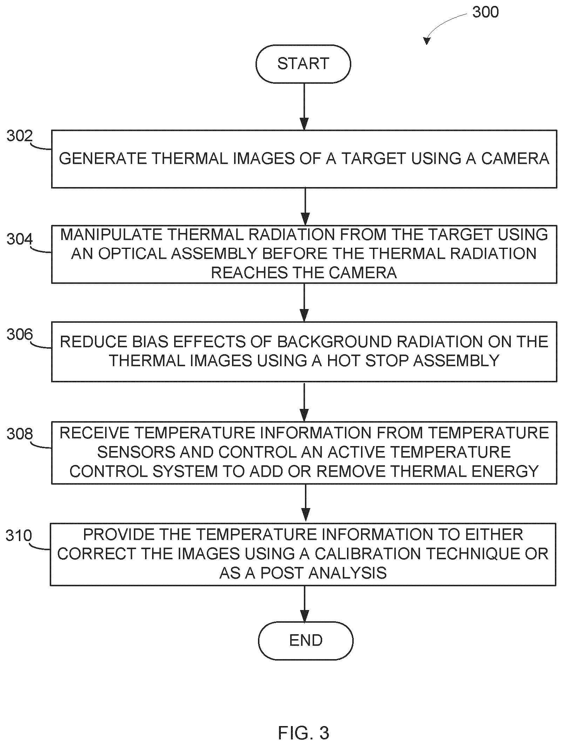

FIGURE 3 illustrates an example method 300 for thermal imaging according to this disclosure. For ease of explanation, the method 300 is described as being performed using the system 100 of FIGURE 1. However, the method 300 could be used with any other suitable device or system.

As shown in FIGURE 3, thermal images of a target are generated using a camera at step 302. This may include, for example, the camera 105 generating thermal images of the target 125. Thermal radiation from the target to the camera is manipulated or transferred using an optical assembly at step 304 before the radiation reaches the camera. The optical assembly is disposed between the camera and the target. This may include, for example, the optical assembly 110 manipulating the thermal radiation 120 from the target 125.

Bias effects of background radiation is reduced on the thermal images of the target at step 306 using a hot stop assembly disposed between the camera and the optical assembly. The hot stop assembly can include (i) a hot aperture having a first surface facing the target and a second surface facing an interior portion of the hot stop assembly, and (ii) a cold aperture having a first surface facing the camera and a second surface facing the interior portion of the hot stop assembly. This may include, for example, the hot stop assembly 115 reducing the bias effects of background radiation on the thermal images of the target 125.

Temperature information is received from one or more temperature sensors at a control device at step 308 and, in response to the received temperature information, an active temperature control system is controlled to add or remove thermal energy from the cold heat sink. This may include, for example, the control device 190 receiving temperature information from the temperature sensors 180 and controlling the active temperature control system 185 to add or remove thermal energy from the cold heat sink 145.

In some embodiments, the temperature information can be provided at step 310 to either correct the images using a calibration technique in real time or as a post analysis. This may include, for example, the control device 190 or another device correcting the images using a calibration technique.

Although FIGURE 3 illustrates one example of a method 300 for thermal imaging, various changes may be made to FIGURE 3. For example, while shown as a series of steps, various steps shown in FIGURE 3 could overlap, occur in parallel, occur in a different order, or occur multiple times. Moreover, some steps could be combined or removed and additional steps could be added according to particular needs.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive (HDD), a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A device comprising:
a hot stop assembly (115) configured to be disposed between a thermal imaging camera (105) and an optical assembly (110) that is able to be positioned between the thermal imaging camera (105) and a target (125), the hot stop assembly (115) comprising:
a hot aperture (130) having a first surface (160) configured to face the target (125) and a second surface (165) configured to face an interior portion of the hot stop assembly (115); and
a cold aperture (140) having a first surface (170) configured to face the camera (105) and a second surface (175) configured to face the interior portion of the hot stop assembly (115),
wherein the hot aperture (130) is thermally isolated from the cold aperture (140).

2. A system (100) comprising:
a camera (105) configured to detect thermal radiation (120) emitted from a target (125);
an optical assembly (110) configured to be disposed between the camera (105) and the target (125); and
the device of claim 1.

3. The device of claim 1 or system of claim 2, wherein the hot stop assembly (115) further comprises:
a hot heat sink (135) coupled to the hot aperture (130) and configured to receive thermal energy absorbed by the hot aperture (130);
a cold heat sink (145) coupled to the cold aperture (140) and configured to help maintain the cold aperture (140) at a substantially constant temperature; and
a thermal isolation block (150) disposed between the hot heat sink (135) and the cold heat sink (145) and configured to thermally isolate the hot heat sink (135) and the hot aperture (130) from the cold heat sink (145) and the cold aperture (140).

4. The device or system of claim 3, further comprising:
one or more temperature sensors (180; 214) disposed on one or more surfaces (160; 165; 170; 175) of the hot aperture (130) and the cold aperture (140).

5. The device or system of claim 4, further comprising:
an active temperature control system (185) coupled to the cold heat sink (145); and
a control device (190; 200) configured to receive temperature information from the one or more temperature sensors (180; 214) and, in response to the received temperature information, control the active temperature control system (185) to add or remove thermal energy from the cold heat sink (145).

6. The device or system of any preceding claim, wherein:
the first surfaces (160; 170) of the hot aperture (130) and the cold aperture (140) have corresponding first emissivities; and
the second surfaces (165; 175) of the hot aperture (130) and the cold aperture (140) have corresponding second emissivities that are lower than the first emissivities.

7. The device or system of any preceding claim, wherein the target (125) comprises portions of an engine.

8. The device or system of any preceding claim, wherein the device or system (100) and the target (125) are disposed together in a housing.

9. A method comprising:
generating thermal images of a target (125) using a camera (105);
manipulating thermal radiation (120) from the target (125) before the thermal radiation (120) reaches the camera (105) using an optical assembly (110) disposed between the camera (105) and the target (125); and
reducing bias effects of background radiation on the thermal images of the target (125) using a hot stop assembly (115) disposed between the camera (105) and the optical assembly (110);
wherein the hot stop assembly (115) comprises (i) a hot aperture (130) having a first surface (160) facing the target (125) and a second surface (165) facing an interior portion of the hot stop assembly (115) and (ii) a cold aperture (140) having a first surface (170) facing the camera (105) and a second surface (175) facing the interior portion of the hot stop assembly (115); and
wherein the hot aperture (130) is thermally isolated from the cold aperture (140).

10. The method of claim 9, wherein the hot stop assembly (115) further comprises:
a hot heat sink (135) coupled to the hot aperture (130) and configured to receive thermal energy absorbed by the hot aperture (130);
a cold heat sink (145) coupled to the cold aperture (140) and configured to help maintain the cold aperture (140) at a substantially constant temperature; and
a thermal isolation block (150) disposed between the hot heat sink (135) and the cold heat sink (145) and configured to thermally isolate the hot heat sink (135) and the hot aperture (130) from the cold heat sink (145) and the cold aperture (140).

11. The method of claim 10, further comprising:
measuring or estimating temperatures using one or more temperature sensors (180; 214) disposed on one or more surfaces (160; 165; 170; 175) of the hot aperture (130) and the cold aperture (140).

12. The method of claim 11, further comprising:
receiving temperature information from the one or more temperature sensors (180; 214) at a control device (190) and, in response to the received temperature information, controlling an active temperature control system (185) to add or remove thermal energy from the cold heat sink (145);
wherein the active temperature control system (185) is coupled to the cold heat sink (145).

13. The method of any of claims 9 to 12, wherein:
the first surfaces (160; 170) of the hot aperture (130) and the cold aperture (140) have corresponding first emissivities; and
the second surfaces (165; 175) of the hot aperture (130) and the cold aperture (140) have corresponding second emissivities that are lower than the first emissivities.

14. The method of any of claims 9 to 13, wherein the target (125) comprises portions of an engine.
